# EUROPEAN PATENT SPECIFICATION

(11) **EP 1 693 419 B1**
(45) Date of publication and mention of the grant of the patent: **11.04.2012**
(21) Application number: 06101693.7
(22) Date of filing: 15.02.2006
(51) Int. Cl.: C08L 81/00, C08L 63/00, C08J 3/00

(54) **Composition and method for forming an article having improved properties**
Zusammensetzung und Verfahren zur Herstellung eines Artikels mit verbesserten Eigenschaften
Composition et méthode de fabrication d'un article avec des propriétés améliorées

(30) Priority: 18.02.2005 US 61844
(43) Date of publication of application: 23.08.2006
(73) Proprietor: BASF SE, 67056 Ludwigshafen (DE)
(72) Inventor: Krueger, David Carl, Grosse Ile, MI 48138 (US)

(56) References cited:
- FR-A- 2 842 206
- US-A- 5 026 789
- US-A1- 2003 130 421

## Description

### BACKGROUND OF THE INVENTION

### 1. Field of the Invention

The subject invention relates to a composition and a method for forming an article. More specifically, the subject invention relates to forming an article from an extrusion process or an injection molding process.

### 2. Description of the Prior Art

Various engineered thermoplastics are known in the art. An impact-resistant thermoplastic resin composition is disclosed in Japanese Patent Application No. 59-11360A. The composition comprises 50-99 parts by weight an aromatic polysulfone and 1-50 parts by weight of an epoxy containing copolymer which is melted by heating and then mixed. The epoxy containing copolymer comprises from 1-50 mol% of an epoxy group-containing monomer and 50-99 mol% of a monomer that does not contain epoxy groups. The Japanese Patent Application No. 59-11360A further discloses that other thermoplastic resins can be added to the composition, such as polystyrene, Nylon-6, Nylon-66, etc. The method of preparing the composition includes dry blending the polysulfone and the epoxy containing copolymer. The dry blended material is then melt-kneaded in an extruder to produce pellets of the desired composition and the pellets are supplied to an injection molder and samples are molded.

Referring to Table 1 of the Japanese Patent Application No. 59-11360A, working examples 1-5 include the polysulfone present in an amount of from 65 to 90 parts by weight and the epoxy containing copolymer present in an amount of from 10 to 35 parts by weight. Various properties were experimentally determined for each of the working examples, such as an Izod impact strength and a heat deflection temperature. The Izod impact strength test (ASTM D256) swings a pendulum on a track and strikes a notched, cantilevered sample. In other words, the sample is supported by only one end. The energy required to break the sample as the pendulum continues on its path is measured. The result of the Izod, test is typically reported in energy lost (kg-cm, ft-lb, or J) per unit of specimen thickness (cm or in) at the notch. Additionally, the results may be reported as energy lost per unit cross-sectional area at the notch (KJ/m², kg-cm/cm², or ft-lb/in²). Heat Deflection Temperature (HDT) (ASTM D648) is the temperature at which an applied load causes a sample supported at both ends to deflect 0.25 mm. The two loads commonly used are 0.46 MPa (66 psi) and 1.8 MPa (264 psi). More specifically, the load is applied to the center of the sample as the temperature of the sample is raised. It is common to dispose the sample in a liquid bath and raise the temperature of the liquid bath until the HDT is achieved.

Working Example 1 has 90 parts by weight polysulfone and 10 parts by weight ethylene/glycidyl methacrylate (90/10 weight ratio) copolymer and produced a sample having an Izod impact strength of 25 kg cm/cm notch (30.25 KJ/m²) and a HDT of 171 °C. Working Example 2 has 80 parts by weight polysulfone and 20 parts by weight ethylene/glycidyl methacrylate (90/10 weight ratio) copolymer and produced a sample having an Izod impact strength of 27 kg cm/cm notch (32.67 KJ/m²) and a HDT of 168 °C. Working Example 4 has 80 parts by weight polysulfone and 20 parts by weight ethylene/vinyl acetate/glycidyl methacrylate (90/5/5 weight ratio) copolymer and produced a sample having an Izod impact strength of 31 kg cm/cm notch (37.51 KJ/m²) and a HDT of 163 °C.

With reference to Comparative Examples 1 and 4, an article is formed only from the polysulfone. In Comparative Example 1, the composition is mixed with a dul-madge screw extruder, whereas in Comparative Example 4, the composition is mixed with a single screw extruder equipped with a screw having a compression ratio of 2.6/1. The different type of screw affects the properties of the resultant article. Comparative Example 1 had an Izod impact strength of 4.5 kg cm/cm notch (5.45 KJ/m²) and a heat deflection temperature of 175 °C. Comparative Example 4 had an Izod impact strength of 5.6 kg cm/cm notch (6.78 KJ/m²) and a heat deflection temperature of 203 °C.

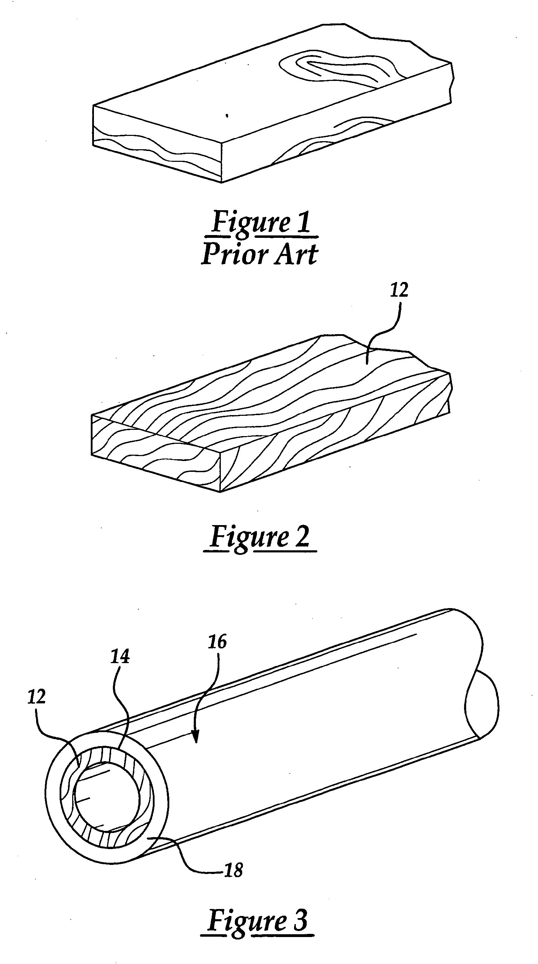

It has surprisingly been experimentally determined that manufacturing the articles as taught in the Japanese Patent Application No. 59-11360A results in a non-uniform distribution of the epoxy containing copolymer throughout the polysulfone, as illustrated in Figure 1 (Prior Art). The epoxy containing copolymer is not homogeneously dispersed within the polysulfone such that the surface appearance is visibly inconsistent which indicates inconsistent accumulations of the epoxy containing copolymer. The accumulations of the epoxy containing copolymer results in the article being brittle and having poor physical properties.

The conventional compositions and the conventional methods of forming an article from the compositions in the related art are characterized by one or more inadequacy. Specifically, the related art compositions and methods result in non-uniform distribution of the epoxy containing copolymer within the polysulfone such that the physical properties of the article are insufficient.

### SUMMARY OF THE INVENTION AND ADVANTAGES

The subject invention provides a composition and a method for forming an article. The composition includes (A) a base resin and (B) a plasticizer. The base resin (A) is substantially free of polyphenylene sulfides and includes at least one of a polyether sulfone and a polysulfone. The base resin has terminal groups selected from at least one of hydroxyl groups, alkoxy groups, alkylene halide groups, and halogens and a weight-average molecular weight of from 20,000 to 50,000. The plasticizer (B) is substantially free of styrenic compounds and is present in an amount of from 1 to 25 parts by weight based on 100 parts by weight of the composition. The plasticizer includes a copolymer of (i) an alkylene and (ii) an epoxy-containing compound present in an amount of from 1 to 20 parts by weight based on 100 parts by weight of the plasticizer. The method of forming the article includes the steps of providing the base resin and the plasticizer and forming the article from the base resin and the plasticizer via an extrusion process or an injection molding process.

The article formed from the extrusion process or the injection molding process with the subject invention has improved physical properties. Those skilled in the art would anticipate that when a plasticizer is added to a base resin, the resultant article would have improved ductility and flexibility, but would have deteriorated thermal properties. The subject invention achieves increased physical properties, such as impact strength, while still maintaining thermal properties, such as heat deflection temperature. It is believed that the novel composition and method for forming the article according to the subject invention results in these improved properties.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a perspective view of a prior art article having a plasticizer non-uniformly dispersed or distributed within a base resin;

Figure 2 is a perspective view of an article formed according to the subject invention having the plasticizer uniformly dispersed throughout the base resin;

Figure 3 is a perspective view of an oil pipe having a pipe liner formed from the composition of to the subject invention;

Figure 4 is a cross-sectional view of a part formed from one composition according to the subject invention;

Figure 5 is a cross-sectional view of a part formed from another composition according to the subject invention;

Figure 6 is a cross-sectional view of a part formed from yet another composition according to the subject invention; and

Figure 7 is a cross-sectional view of a part formed from still another composition according to the subject invention.

### DETAILED DESCRIPTION OF THE INVENTION

The subject invention provides a composition and method for forming an article shown at 12 in Figure 2. As is evident from the description below, the article 12 has improved physical properties, while also maintaining high heat deflection temperatures. Therefore, the subject invention is particularly useful for articles, such as engineered parts, that are frequently exposed to high temperature conditions. Examples of such articles include, but are not limited to, engine and automobile components such as oil control pistons, headlight bezels, gear forks, electrical components such as fuse encapsulations, medical devices, food and household components such as service trays, nursing bottles, heating and sanitation devices, as well as athletic and sporting equipment.

Yet another example includes, but is not limited to, the article 12 formed as a pipe liner having increased thermal and chemical resistance is shown in Figure 3. The pipe liner 12 coats an inner surface 14 of a pipe 16. One typical application for the pipe 16 may include extracting oil from the ground. These pipes 16 extend hundreds of feet into the ground to extract oil. The pipe 16 is exposed to increased temperatures and pressures where the oil is located. The pipes 16 are manufactured in continuous lengths and are typically rolled when transported. Therefore, the pipe liner 12 must be flexible to allow the pipe 16 to be rolled without the pipe liner 12 cracking or undergoing excessive wear during transportation. The pipe liner 12 must also have high thermal resistance since the pipe 16 is inserted into the ground and exposed to high temperatures. The pipe 16 is typically formed of an exterior protective layer, a layer of fiber reinforcement, and a layer in contact with the fluid. Referring to Figure 3, the exterior layer may be formed from a polymer 18, such as, but not limited to, nylon or high density polyethylene, with the pipe liner 12 formed of the composition of the subject invention lining the inside surface 14 and as the layer in contact with the fluid. It is to be appreciated that the subject invention is not limited to the embodiment described above and various other uses are taught by the subject invention. For example, the pipe 16 may include a mono-layer pipe or multiple layers such as a high temperature layer, an adhesive layer, and a nylon layer.

The composition includes (A) a base resin and (B) a plasticizer. The base resin (A) is substantially free of polyphenylene sulfides, commonly referred to as PPS, and includes at least one of a polyether sulfone (PES) and a polysulfone (PSU). The base resin may include both the PES and the PSU, if desired. It is to be understood that, in the context of the subject invention, substantially free of polyphenylene sulfides (PPS) is intended to indicate that the composition has less than about 2.5 parts by weight of PPS based on 100 parts by weight of the composition. Preferably, the composition has less than about 1 part by weight of PPS based on 100 parts by weight of the compositions. More preferably, there are zero parts by weight of PPS based on 100 parts by weight of the composition. Those skilled in the art recognize that incorporating PPS into the composition alters the chemistry and the resultant article has significantly different thermal and chemical properties than those described in the subject invention. More specifically, PPS has a lower heat deflection temperature of about 100 °C under a pressure of 1.8 MPa and lower physical properties such as an Izod impact (notched) of about 9 kJ/m².

The polyether sulfone is of the general formula:

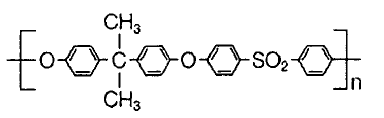

wherein n is from 20 to 100.

The polysulfone is of the general formula:

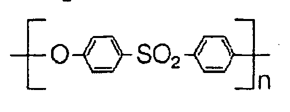

wherein n is from 50 to 250.

The base resin has terminal groups selected from at least one of hydroxyl groups, alkoxy groups, alkylene halide groups, and halogens. The base resin may include any combination of the terminal groups without deviating from the subject invention. When the terminal groups include the alkoxy groups, the alkoxy groups preferably may have a chain of from 1 to 5 carbon atoms. When the terminal groups include halogens, the halogens are selected from at least of one chlorine and fluorine. In one preferred embodiment, the terminal groups include methylene chloride.

The base resin also has a weight-average molecular weight of from 20,000 to 50,000. It has been determined that the molecular weight of the base resin impacts the overall thermal and chemical properties of the resultant article, therefore, the molecular weight should be from 20,000 to 50,000 to achieve the desired physical and thermal properties. Preferably, the weight-average molecular weight is from 20,000 to 40,000 and more preferably from 22,000 to 32,000. Other indicators of the molecular weight of the base resin is viscosity number and polydispersity. The viscosity number is representative of the ability of the base resin to flow. The lower the viscosity number, the greater the ability of the base resin to flow when heated. The base resin has a viscosity number of from 45-85, preferably from 50-80, and more preferably from 53-76 milliliters per gram. The polydispersity is the weight-average molecular weight divided by the number-average molecular weight and the base rein has a polydispersity of from 2 to 5. The base resin also has a melting point, or softening temperature, of from 300 to 400 degrees Celsius, as will be discussed in more detail below. Those skilled in the art appreciate that PES and PSU are amorphous polymers that have a low degree of crystallinity, such that the base resin does not have a well-defined melting point. Therefore, as used herein and as understood by those skilled in the art, the melting point is within the processing range of the base resin, such that the base resin begins to flow within this temperature range and allows the plasticizer to be homogenously mixed therein.

The plasticizer (B) is substantially free of styrenic compounds. It is to be understood that, in the context of the subject invention, substantially free of styrenic compounds is intended to indicate that the plasticizer has less than about 2.5 parts by weight of styrenic compounds based on 100 parts by weight of the plasticizer. Preferably, the plasticizer has less than about 1 part by weight of styrenic compounds based on 100 parts by weight of the plasticizer. More preferably, there are zero parts by weight of styrenic compounds based on 100 parts by weight of the plasticizer. Styrenic compounds typically are lower melting polymers and would impact the thermal properties of the subject invention.

The plasticizer includes a copolymer of (i) an alkylene and (ii) an epoxy-containing compound. The alkylene has an aliphatic chain of from 1 to 10 carbon atoms and examples include, but are not limited to, methylene, ethylene, propylene, butylene, pentene, and hexane. Preferably, the alkylene is ethylene. The epoxy-containing compound includes the reaction product of an epoxide and a carboxylic acid. The epoxy-containing compound is preferably glycidyl methacrylate. The epoxy-containing compound is present in an amount of from 1 to 20 parts by weight based on 100 parts by weight of the plasticizer. Preferably, the epoxy-containing compound is present in an amount of from 5 to 15 parts by weight, more preferably from 5 to 10 parts by weight, both based on 100 parts by weight of the plasticizer. In another embodiment, the epoxy-containing compound is present in an amount of from 10 to 20 parts by weight based on 100 parts by weight of the plasticizer.

The plasticizer is present in an amount of from 1 to 25 parts by weight based on 100 parts by weight of the composition. Preferably, the plasticizer is present in an amount of from 5 to 25 parts by weight and more preferably, from 10 to 25 parts by weight, both based on 100 parts by weight of the composition. The plasticizer has a melting point less than the melting point of the base resin. Preferably, the plasticizer has a melting point of less than 100 degrees Celsius, and more preferably from 50 to 100 degrees Celsius.

In another embodiment, the plasticizer further includes (iii) an alkyl acrylate present in an amount of from 1 to 35 parts by weight based on 100 parts by weight of the plasticizer. The alkyl acrylate is selected from at least one of methyl acrylate, ethyl acrylate, propyl acrylate, and butyl acrylate. Preferably, the alkyl acrylate is present in an amount of from 20 to 35 parts by weight, and more preferably, from 20 to 30 parts by weight, both based on 100 parts by weight of the plasticizer.

The subject invention also provides the method of forming the article from the base resin and the plasticizer via an extrusion process or an injection molding process. Preferably, the article is co-extruded from the base resin and the plasticizer. It has been experimentally determined that the difference of the melting points of the base resin and the plasticizer affects the homogenous distribution of the plasticizer within the base resin. Therefore, when the base resin and the plasticizer are co-extruded, the plasticizer is added downstream from the base resin to pre-heat the base resin prior to adding the plasticizer. Said another way, the base resin is added earlier in the extrusion process because the base resin has a higher melting point than the plasticizer. Adding the plasticizer later allows the base resin to begin to melt so that the plasticizer will uniformly disperse throughout the base resin.

The plasticizer is homogeneously mixed, or dispersed, within the base resin thereby improving the physical properties of the article. The article has a heat deflection temperature of at least 165 degrees Celsius under a load of 1.8 MPa and a charpy notched impact strength of from 28 to 65 kilojoules per square meter. The article also has a tensile strength at break of from 25 to 65 MPa.

The following examples, illustrating the formation of the article according to the subject invention, as presented herein, are intended to illustrate and not limit the invention.

### Examples

The compositions according to the subject invention were formed from the components listed in Table 1 as parts by weight, unless otherwise indicated.

**Table 1: Formulations of Composition**

| | Base Resin A | Base Resin B | Base Resin C | Base Resin D | Plasticizer A | Plasticizer B | Plasticizer C | Plasticizer D | TOTAL |
|---|---|---|---|---|---|---|---|---|---|
| Example 1 | 87.5 | -- | -- | -- | 12.5 | -- | -- | -- | 100.0 |
| Example 2 | 80.0 | -- | -- | -- | 20.0 | -- | -- | -- | 100.0 |
| Example 3 | 87.5 | -- | -- | -- | -- | -- | 12.5 | -- | 100.0 |
| Example 4 | -- | 80.0 | -- | -- | -- | 20.0 | -- | -- | 100.0 |
| Example 5 | -- | 80.0 | -- | -- | -- | -- | 20.0 | -- | 100.0 |
| Example 6 | -- | 80.0 | -- | -- | -- | -- | -- | 20.0 | 100.0 |
| Example 7 | -- | -- | 80.0 | -- | -- | 20.0 | -- | -- | 100.0 |
| Example 8 | -- | -- | 80.0 | -- | -- | -- | 20.0 | -- | 100.0 |
| Example 9 | -- | -- | 80.0 | -- | -- | -- | -- | 20.0 | 100.0 |
| Example 10 | -- | -- | -- | 90.0 | 10.0 | -- | -- | -- | 100.0 |
| Example 11 | -- | -- | -- | 85.0 | 15.0 | -- | -- | -- | 100.0 |
| Example 12 | -- | 90.0 | -- | -- | 10.0 | -- | -- | -- | 100.0 |
| Example 13 | -- | 85.0 | -- | -- | 15.0 | -- | -- | -- | 100.0 |
| Example 14 | -- | 85.0 | -- | -- | 15.0 | -- | -- | -- | 100.0 |
| Example 15 | -- | 85.0 | -- | -- | 15.0 | -- | -- | -- | 100.0 |
| Example 16 | -- | 85.0 | -- | -- | -- | -- | 15.0 | -- | 100.0 |
| Example 17 | -- | 85.0 | -- | -- | -- | -- | 15.0 | -- | 100.0 |
| Control 1 | 100.0 | -- | -- | -- | -- | -- | -- | -- | 100.0 |
| Control 2 | -- | 100.0 | -- | -- | -- | -- | -- | -- | 100.0 |
| Control 3 | -- | -- | 100.0 | -- | -- | -- | -- | -- | 100.0 |
| Control 4 | -- | -- | -- | 100.0 | -- | -- | -- | -- | 100.0 |

Base Resin A is a polyether sulfone resin having methylene chloride terminal groups and a weight-average molecular weight of 24,500-27,000 and a polydispersity of 2.5-3.0. The base resin A has a melting point of about 340-390 °C. The base resin A is commercially available as ULTRASON® E2010 from BASF Corporation.

Base Resin B is a polyether sulfone resin having methylene chloride terminal groups and a weight-average molecular weight of 28,000-30,500 and a polydispersity of 2.5-3.0. The base resin B has a melting point of about 350-390 °C. The base resin B is commercially available as ULTRASON® E3010 from BASF Corporation.

Base Resin C is a polysulfone resin having methylene chloride terminal groups and a weight-average molecular weight of 26,000-28,600 and a polydispersity of 3.0-4.0. The base resin C has a melting point of about 330-380 °C. The base resin C is commercially available as ULTRASON® S2010 from BASF Corporation.

Base Resin D is a polysulfone resin having methylene chloride terminal groups and a weight-average molecular weight of 28,500-32,000 and a polydispersity of 3.0-4.0. The base resin D has a melting point of about 330-380 °C. The base resin D is commercially available as ULTRASON® S3010 from BASF Corporation.

Plasticizer A is a terpolymer of ethylene, methyl acrylate, and glycidyl methacrylate. The epoxy-containing compound, glycidyl methacrylate, is present in an amount of about 8 parts by weight, and the methyl acrylate is present an amount of about 24 parts by weight, both based on 100 parts by weight of the plasticizer. The plasticizer A has a melting point of about 60 °C. The plasticizer A is commercially available as LOTADER® AX 8900 from ATOFINA.

Plasticizer B is a copolymer of ethylene and glycidyl methacrylate. The epoxy-containing compound, glycidyl methacrylate, is present in an amount of about 8 parts by weight based on 100 parts by weight of the plasticizer. The plasticizer B has a melting point of about 106 °C. The plasticizer B is commercially available as LOTA-DER® AX 8840 from ATOFINA.

Plasticizer C is a terpolymer of ethylene, methyl acrylate, and glycidyl methacrylate. The epoxy-containing compound, glycidyl methacrylate, is present in an amount of about 2 parts by weight, and the methyl acrylate is present an amount of about 24 parts by weight, both based on 100 parts by weight of the plasticizer. The plasticizer C has a melting point of about 60 °C. The plasticizer C is commercially available as LOTADER® AX 8920 from ATOFINA.

Plasticizer D is an ethylene copolymer containing epoxy functionality and is a terpolymer of ethylene, butyl acrylate, and glycidyl methacrylate. The epoxy-containing compound, glycidyl methacrylate, is present in an amount of about 8 parts by weight, and the butyl acrylate is present an amount of about 27 parts by weight, both based on 100 parts by weight of the plasticizer. The plasticizer D has a melting point of about 72 °C. The plasticizer D is commercially available as ELVALOY® PTW from DUPONT.

The components were added to an extruder and a product was extruded therefrom. Examples 1-14, 16, and Control 1-4 were extruded by adding each of the components into a main feed of the extruder. Examples 15 and 17 were prepared by adding the base resin to the main feed while the plasticizer was added downstream in a side feed. The product is cooled, preferably in a water bath, and then the product is pelletized. The pellets are then dried for about 3-4 hours at 130-150 °C.

The pelletized product is then molded into an article via an extrusion process or an injection molding process. The article may have various shapes depending upon the application. For example, the pelletized product may be molded into tensile bars to test the tensile properties or may be molded into flexural bars to test the flexural properties. The following tests were conducted on the samples and the physical properties were determined: ASTM D6110-97 Charpy Impact Resistance of Notched Specimens of Plastics; ASTM D648 Heat Deflection Temperature (HDT); and ISO 527-2 Tensile Strength at break. The article was preconditioned for 24 hours at 23 °C and 50% relative humidity. All tests were conducted at 23 °C and 50% relative humidity.

The Charpy Impact Resistance test generally supports the sample horizontally and at both ends. A hammer is released and allowed to strike through the sample. If breakage does not occur, a heavier hammer is used until failure occurs. The test measures the amount of energy needed to break a sampled fixed across a 100 mm span. The Charpy and Izod impact strength tests are similar and the results are also similarly affected by variations in resin and temperature. However, the values of Charpy tests tend to be slightly higher than Izod test values because of the orientation of the notch on the sample.

As described above, the HDT is the temperature at which an applied load causes a sample supported at both ends to deflect 0.25 mm. The two common loads used are 0.46 MPa (66 psi) and 1.8 MPa (264 psi). More specifically, the load is applied to the center of the sample as the temperature of the sample is raised. It is common to dispose the sample in a liquid bath and raise the temperature of the liquid bath until the HDT is achieved.

The tensile strength test (ASTM D-256) supports the article at both ends and a force is applied longitudinally until the article breaks. The amount of force required to break the sample is the tensile strength at break.

The following table indicates the Charpy, HDT, density, and tensile strength at break for the samples tested. Table 2 also includes a homogeneity value determined by visually inspecting the sample. Samples that have a homogeneity value of 9 indicate that the surface appearance is visibly consistent which indicates that the plasticizer is dispersed throughout the base resin. Samples that have a homogeneity value of 1 indicate that the surface appearance is visibly inconsistent which indicates inconsistent accumulations of the plasticizer within the base resin. Samples that have a homogeneity value of 5 have fewer inconsistencies in the surface which indicates the plasticizer is not yet completely dispersed throughout the base resin.

**Table 2: Properties**

| | Charpy, Kj/m² | HDT, °C | Tensile Strength at break, MPa | Homogeneity | Extruder Type |
|---|---|---|---|---|---|
| Example 1 | 23.1 | 191.1 | 48.7 | 9 | 40-mm, twin screw |
| Example 2 | 38.5 | 189.0 | 46.8 | 5 | 40-mm, twin screw |
| Example 3 | 30.7 | 190.7 | 49.0 | 1 | 40-mm, twin screw |
| Example 4 | 44.3 | 175.3 | 35.0 | 1 | 40-mm, twin screw |
| Example 5 | 26.7 | 173.3 | 30.0 | 1 | 40-mm, twin screw |
| Example 6 | 38.1 | 184.1 | 33.0 | 1 | 40-mm, twin screw |
| Example 7 | 49.2 | 153.5 | 43.0 | 7 | 40-mm, twin screw |
| Example 8 | 62.4 | 154.0 | 38.0 | 1 | 40-mm, twin screw |
| Example 9 | 42.4 | 158.4 | 42.0 | 5 | 40-mm, twin screw |
| Example 10 | 56.2 | 162.9 | 43.5 | 9 | 25-mm, twin screw |
| Example 11 | 48.4 | 163.0 | 39.7 | 9 | 25-mm, twin screw |
| Example 12 | 51.9 | 195.0 | 50.2 | 9 | 25-mm, twin screw |
| Example 13 | 43.3 | 193.0 | 46.7 | 9 | 25-mm, twin screw |
| Example 14 | 30.8 | 194.1 | 46.0 | NA | 40-mm, twin screw |
| Example 15 | 33.4 | 193.6 | 47.4 | NA | 40-mm, twin screw |
| Example 16 | 18.4 | 178.1 | 34.0 | NA | 40-mm, twin screw |
| Example 17 | 28.4 | 181.1 | 33.0 | NA | 40-mm, twin screw |
| Control 1 | 6.5 | 195.0 | 90.0 | NA | 40-mm, twin screw |
| Control 2 | 6.5 | 195.0 | 90.0 | NA | 40-mm, twin screw |
| Control 3 | 5.5 | 167.0 | 80.0 | NA | 40-mm, twin screw |
| Control 4 | 5.5 | 171.0 | 80.0 | NA | 40-mm, twin screw |

Control 1-4 are samples formed of only the base resins A-D and the properties can be compared to Examples 1-16. From Table 2, the effect of the plasticizer on the properties can also be determined. More specifically, Control 1 was based on base resin A and has a HDT of 195 °C and a charpy of 6.5. Examples 1-3 were also based on base resin A with the plasticizer added to the base resin A. In Example 1, the HDT was reduced by 2% and the charpy increased by 255%. In Example 2, the HDT was reduced by 3% and the charpy increased by 492%. In Example 3, the HDT was reduced by 2.2% and the charpy increased by 372%. Comparing Examples 1 and 2, Example 1 had less plasticizer A added than Example 2 and Example 1 had a lower charpy and a higher HDT than Example 2. Comparing Examples 1 and 3, Example 1 had plasticizer A and Example 3 had plasticizer C, where the plasticizer was added in the same amount. Example 1 had a lower charpy and a higher HDT than Example 3.

Control 2 was based on base resin B and has a HDT of 195 °C and a charpy of 6.5. Examples 4-6 and 12 were also based on base resin B with different plasticizers added to the base resin B. In Example 4, the plasticizer was the plasticizer B and the HDT was reduced by 10.1 %, while the charpy increased by 581%. In Example 5, the plasticizer was the plasticizer C and the HDT was reduced by 11.1 % and the charpy increased by 310%. In Example 6, the plasticizer was the plasticizer D and the HDT was reduced by 5.5% and the charpy increased by 486%. In Example 12, the plasticizer was the plasticizer A and the HDT was reduced by 0% and the charpy increased by 698%.

Control 3 was based on base resin C and has a HDT of 167 °C and a charpy of 5.5. Examples 7-9 were also based on base resin C with different plasticizers added to the base resin C. In Example 7, the plasticizer was the plasticizer B and the HDT was reduced by 8.1%, while the charpy increased by 794%. In Example 8, the plasticizer was the plasticizer C and the HDT was reduced by 7.7% and the charpy increased by 1034%. In Example 9, the plasticizer was the plasticizer D and the HDT was reduced by 5.1 % and the charpy increased by 670%.

Control 4 was based on base resin D and has a HDT of 171 °C and a charpy of 5.5. Examples 10 and 11 were also based on base resin D with plasticizer A added to the base resin D in different amounts. In Example 10, the HDT was reduced by 4.7%, while the charpy increased by 922%. In Example 11, the HDT was reduced by 4.6% and the charpy increased by 780%. Increasing the amount of the plasticizer A increased the HDT, but lowered the charpy.

Examples 13-17 are each based on the base resin B. Examples 13 and 14 are the same composition both added to the main feed of the extruder, but formed in different types of extruder. Example 13 was formed in a 25-mm, twin screw extruder, whereas Example 14 was formed in a 40-mm, twin screw extruder. The smaller diameter extruder has smaller components that transmit heat at a faster rate tot the mixture. Therefore, the base resin melted faster and was more homogenously blended with the lower melting plasticizer. The homogeneity can be determined comparing the charpy values for the Examples 13 and 14, while the other properties are very similar. Example 13 has larger charpy value as a result of the smaller extruder than does Example 14.

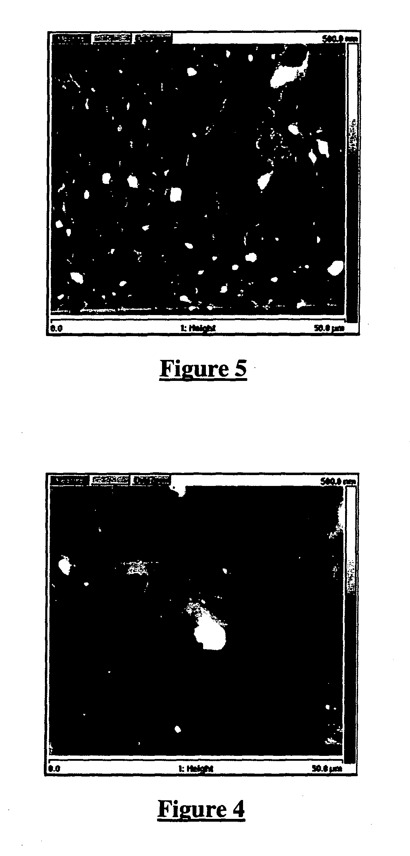

As a result of the properties produced from the smaller extruder experiments were conducted to achieve improved properties in the larger extruder. Namely, the addition of the plasticizer was moved downstream from the base resin to allow the base resin time to begin melting. Figure 4-7 represent cross-sectional views of the produces made from Examples 14-17, respectively. Generally, the cross-sectinoal views represent the distribution of the plasticizer throughout the base resin. The plasticizer is illustrated in the cross-sectional views as the lighter and darker regions. More specifically, the cross-sectional views measure the height of the plasticizer, which is why the plasticizer is illustrated as lighter and darker than the base resin.

Examples 14 and 15 include the plasticizer A and Examples 16 and 17 include the plasticizer C. Examples 14 and 16 were formed by adding the components into the main feed of the extruder, whereas Examples 15 and 17 added the plasticizer in a side feed downstream from the main feed. Comparing Examples 14 and 15, the HDT was about the same, however, the charpy increased by 8.4%, as a result of adding the plasticizer downstream from the base resin. Referring to Figure 4, Example 14 is illustrated as having the larger conglomerations of the plasticizer represented by the large dark and light areas. These large conglomerations are indicative of non-homogeneity. However, in Figure 5, Example 15 illustrates the plasticizer being smaller and more distributed throughout the base resin, which tends to indicate that the base resin and plasticizer are more homogenously mixed.

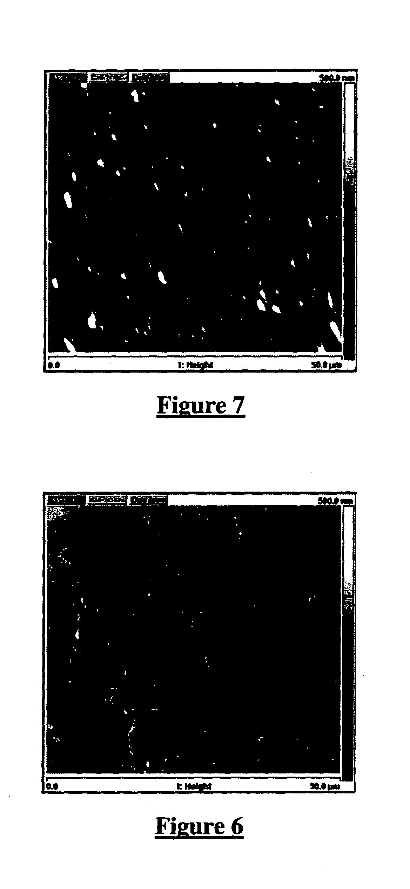

Likewise, in Examples 16 and 17, the HDT remained about the same, while the charpy increased by 54%, as a result of adding the plasticizer downstream from the base resin. Referring to Figure 6, Example 16 is illustrated as having the plasticizer forming strand-like regions within the base resin. These strand-like regions are indicative of non-homogeneity and limited mixing of the base resin and the plasticizer. However, in Figure 7, Example 17 is illustrated as having the plasticizer present in smaller conglomerations and more dispersed within the base resin, which indicates that the base resin and the plasticizer are more homogenously mixed.

Examples 14-17 were further tested for the effect of annealing on the HDT for these samples, in accordance with ASTM 6394. The results are listed in the following table:

**Table 3: Effect of Annealing Samples on HDT in °C**

| | 2-3 weeks at 23 °C & 50% Relative Humidity (RH) | 24-72 hours at 23 °C & 50% RH | Annealed for 1 hour at 200 °C; sealed in foil bags for 24 hours | Annealed for 1 hour at 200 °C then conditioned at 23 °C & 50% RH for 16 days |
|---|---|---|---|---|
| Example 14 | 188 | 189 | 213 | 209 |
| Example 15 | 188 | 195 | 216 | 208 |
| Example 16 | 187 | 194 | 215 | 208 |
| Example 17 | 184 | 191 | 215 | 208 |

As illustrated in Table 3, annealing the samples increases the thermal properties of the samples, such that the HDT for each sample increased by about 25-31 degrees shortly after being annealed. Further, even after more than two weeks, the samples had an increase in the HDT by about 20-24 degrees. Therefore, the annealed samples higher a higher HDT over an extended period of time versus the non-annealed samples.

From the above results, the subject invention has obtained an article that has significantly improved physical properties while also maintaining the high heat deflection temperatures. Further, it has been experimentally determined that the more homogeneous samples have better physical properties while still also maintaining the high heat deflection temperatures.

## Claims

1. A method of forming an article, said method comprising the steps of:
providing a base resin (A) substantially free of polyphenylene sulfides and comprising at least one of a polyether sulfone and a polysulfone, wherein the base resin has terminal groups selected from at least one of hydroxyl groups, alkoxy groups, alkylene halide groups, and halogens and a weight-average molecular weight of from 20,000 to 50,000;
providing a plasticizer (B) containing less than about 2.5 parts by weight of styrenic compounds based on 100 parts by weight of the plasticizer and present in an amount of from 1 to 25 parts by weight based on 100 parts by weight of the composition, wherein the plasticizer comprises a copolymer of (i) an alkylene and (ii) an epoxy-containing compound present in an amount of from 1 to 20 parts by weight based on 100 parts by weight of the plasticizer; and
forming the article from a composition containing the base resin (A) and the plasticizer (B) via an extrusion process or an injection molding process,
wherein "substantially free of polyphenylene sulfides" means that the composition contains less than about 2.5 parts by weight of polyphenylene sulfides based on 100 parts by weight of the composition.

2. A method as set forth in claim 1 wherein the step of forming the article is further defined as co-extruding the base resin and the plasticizer.

3. A method as set forth in claim 2 wherein the step of co-extruding comprises adding the plasticizer downstream from the base resin to pre-heat the base resin prior to adding the plasticizer.

4. A method as set forth in claim 2 wherein the step of co-extruding is further defined as homogeneously mixing the plasticizer with the base resin for improving physical properties of the article.

5. A method as set forth in claim 1 wherein the plasticizer further comprises (iii) an alkyl acrylate present in an amount of from 1 to 35 parts by weight based on 100 parts by weight of the plasticizer.

6. A method as set forth in claim 5 wherein the alkyl acrylate is selected from at least one of methyl acrylate, ethyl acrylate, propyl acrylate, and butyl acrylate.

7. An article formed according to a method as set forth in claim 1.

8. An article as set forth in claim 7 having a heat deflection temperature of at least 165 degrees Celsius under a load of 1.8 MPa.

9. An article as set forth in claim 7 having a charpy notched impact strength of from 28 to 65 kilojoule per square meter.

10. An article as set forth in claim 7 having a tensile strength at break of from 25 to 65 MPa.

11. An article as set forth in claim 1 further defined as a pipe liner having increased thermal and chemical resistance.

## Patentansprüche

1. Verfahren zum Bilden eines Gegenstands, bei dem man:
ein Grundharz (A) bereitstellt, das weitgehend frei von Polyphenylensulfiden ist und ein Polyethersulfon und/oder ein Polysulfon umfasst, wobei das Grundharz unter Hydroxylgruppen, Alkoxygruppen, Alkylenhalogenidgruppen und Halogenen ausgewählte Endgruppen und ein gewichtsmittleres Molekulargewicht von 20.000 bis 50.000 aufweist;
einen Weichmacher (B) bereitstellt, der weniger als etwa 2,5 Gewichtsteile Styrolverbindungen, bezogen auf 100 Gewichtsteile des Weichmachers, enthält und in einer Menge von 1 bis 25 Gewichtsteilen, bezogen auf 100 Gewichtsteile der Zusammensetzung, vorliegt, wobei der Weichmacher ein Copolymer von (i) einem Alkylen und (ii) einer epoxidgruppenhaltigen Verbindung, die in einer Menge von 1 bis 20 Gewichtsteilen, bezogen auf 100 Gewichtsteile des Weichmachers, vorliegt, umfasst; und
aus einer das Grundharz (A) und den Weichmacher (B) enthaltenden Zusammensetzung nach einem Extrusionsverfahren oder einem Spritzgussverfahren den Gegenstand bildet,
wobei "weitgehend frei von Polyphenylensulfiden" bedeutet, dass die Zusammenstzung weniger als etwa 2,5 Gewichtsteile Polyphenylensulfide, bezogen auf 100 Gewichtsteile der Zusammensetung, enthält.

2. Verfahren nach Anspruch 1, bei dem der Schritt des Bildens des Gegenstands ferner als Coextrudieren des Grundharzes und des Weichmachers definiert ist.

3. Verfahren nach Anspruch 2, bei dem man im Schritt des Coextrudierens den Weichmacher stromabwärts des Grundharzes zugibt, um das Grundharz vor der Zugabe des Weichmachers vorzuerhitzen.

4. Verfahren nach Anspruch 2, bei dem der Schritt des Coextrudierens ferner als homogenes Mischen des Weichmachers mit dem Grundharz zur Verbesserung von physikalischen Eigenschaften des Gegenstands definiert ist.

5. Verfahren nach Anspruch 1, bei dem der Weichmacher ferner (iii) ein Alkylacrylat, das in einer Menge von 1 bis 35 Gewichtsteilen, bezogen auf 100 Gewichtsteile des Weichmachers, vorliegt, umfasst.

6. Verfahren nach Anspruch 5, bei dem man das Alkylacrylat unter Methylacrylat, Ethylacrylat, Propylacrylat und/oder Butylacrylat auswählt.

7. Gegenstand, gebildet nach einem Verfahren gemäß Anspruch 1.

8. Gegenstand nach Anspruch 7 mit einer Wärmeformbeständigkeit von mindestens 165 Grad Celsius unter einer Last von 1,8 MPa.

9. Gegenstand nach Anspruch 7 mit einer Charpy-Kerbschlagzähigkeit von 28 bis 65 Kilojoule pro Quadratmeter.

10. Gegenstand nach Anspruch 7 mit einer Reißfestigkeit von 25 bis 65 MPa.

11. Gegenstand nach Anspruch 1, der ferner als Rohrauskleidung mit erhöhter thermischer und chemischer Beständigkeit definiert ist.

## Revendications

1. Procédé de formation d'un article, ledit procédé comprenant les étapes suivantes :
la mise à disposition d'une résine de base (A) essentiellement exempte de sulfures de polyphénylène et comprenant une polyéther sulfone et/ou une polysulfone, la résine de base comprenant des groupes terminaux choisis parmi les groupes hydroxyle et/ou les groupes alcoxy et/ou les groupes halogénure d'alkylène et/ou les halogènes, et ayant un poids moléculaire moyen en poids de 20 000 à 50 000 ;
la mise à disposition d'un plastifiant (B) contenant moins d'environ 2,5 parties en poids de composés styréniques, par rapport à 100 parties en poids du plastifiant, et présent en une quantité de 1 à 25 parties en poids par rapport à 100 parties en poids de la composition, le plastifiant comprenant un copolymère de (i) un alkylène et (ii) un composé contenant un époxy présent en une quantité de 1 à 20 parties en poids par rapport à 100 parties en poids du plastifiant ; et
la formation de l'article à partir d'une composition contenant la résine de base (A) et le plastifiant (B) par un procédé d'extrusion ou un procédé de moulage par injection,
« essentiellement exempte de sulfures de polyphénylène » signifiant que la composition contient moins d'environ 2,5 parties en poids de sulfures de polyphénylène par rapport à 100 parties en poids de la composition.

2. Procédé selon la revendication 1, dans lequel l'étape de formation de l'article est également définie comme une co-extrusion de la résine de base et du plastifiant.

3. Procédé selon la revendication 2, dans lequel l'étape de co-extrusion comprend l'ajout du plastifiant en aval de la résine de base pour préchauffer la résine de base avant l'ajout du plastifiant.

4. Procédé selon la revendication 2, dans lequel l'étape de co-extrusion est également définie comme un mélange homogène du plastifiant avec la résine de base pour améliorer les propriétés physiques de l'article.

5. Procédé selon la revendication 1, dans lequel le plastifiant comprend également (iii) un acrylate d'alkyle présent en une quantité de 1 à 35 parties en poids par rapport à 100 parties en poids du plastifiant.

6. Procédé selon la revendication 5, dans lequel l'acrylate d'alkyle est choisi parmi l'acrylate de méthyle et/ou l'acrylate d'éthyle et/ou l'acrylate de propyle et/ou l'acrylate de butyle.

7. Article formé par un procédé selon la revendication 1.

8. Article selon la revendication 7, présentant une température de déflection à la chaleur d'au moins 165 degrés Celsius sous une charge de 1,8 MPa.

9. Article selon la revendication 7, présentant une résistance aux chocs Charpy sur éprouvette entaillée de 28 à 65 kilojoules par mètre carré.

10. Article selon la revendication 7, présentant une résistance à la traction à la rupture de 25 à 65 MPa.

11. Article selon la revendication 1, également défini comme un revêtement intérieur de tuyau présentant une résistance thermique et chimique augmentée.
